**Europäisches Patentamt**

**European Patent Office**

**Office européen des brevets**

(19)

(11) Veröffentlichungsnummer: **0 195 831**
**B1**

# (12) EUROPÄISCHE PATENTSCHRIFT

(45) Veröffentlichungstag der Patentschrift:
07.06.89

(21) Anmeldenummer: 85103483.5

(22) Anmeldetag: 23.03.85

(51) Int. Cl.⁴: **H 01 R 35/00**, B 60 R 21/08

(54) **Justiereinrichtung für einen Stromleitungsverbinder von Gassack-Aufprall-Schutzeinrichtungen.**

(43) Veröffentlichungstag der Anmeldung:
01.10.86 Patentblatt 86/40

(45) Bekanntmachung des Hinweises auf die Patenterteilung: 07.06.89 Patentblatt 89/23

(84) Benannte Vertragsstaaten:
DE FR GB NL SE

(56) Entgegenhaltungen:
DE–A– 3 009 109
DE–A– 3 041 258

(73) Patentinhaber: **Petri AG**
**Bahnweg 1**
**D-8750 Aschaffenburg (DE)**

(72) Erfinder: **Zeller, Gregor**
**Jahnstrasse 70**
**D-8750 Aschaffenburg (DE)**
Erfinder: **Bonn, Helmut**
**Dörrmorsbacher Strasse 38**
**D-8751 Haibach (DE)**

(74) Vertreter: **Eyer, Eckhardt Philipp, Dipl.-Ing. et al**
**Patentanwälte Eyer & Linser Robert-Bosch-Strasse 12a**
**D-6072 Dreieich (DE)**

EP 0 195 831 B1

Jouve, 18, rue St-Denis, 75001 Paris, France

## Beschreibung

Die Erfindung betrifft eine Justiereinrichtung für einen Stromleitungsverbinder von Gassack-Aufprall-Schutzeinrichtungen, bestehend aus einem im wesentlichen von einem Leiterband gebildeten Stromleiter, der in mehreren konzentrischen Wicklungen in einem die Lenkspindel bezw. Lenkradnabe umgebenden Gehäuse angeordnet und dessen eines Ende in einem an der Lenkradnabe befestigten und mit dem Lenkrad drehenden Kern und dessen anderes Ende in dem gestellfest montierbaren Gehäuse endet.

Die beispielsweise aus der DE-A-30 09 109 bekannt gewordenen Stromleitungsverbinder dieser Art haben sich funktionell gut bewährt, Schwierigkeiten ergeben sich jedoch gelegentlich durch unsachgemäßen Einbau des Stromleitungsverbinders auf dem Hintergrund, daß die Montage der Stromzuführung wegen der Längenbemessung des Spiralbandes auf den bei Lenkrädern üblichen Maximalausschlag von insgesamt etwa sechs Umdrehungen in der Mittelstellung des Spiralbandes bei Einstellung der Fahrzeugräder auf Geradeausfahrt montiert werden müssen. Bei unbeabsichtigtem versehentlichem Verdrehen des Gehäuses gegenüber dem Kern vor der Montage ergibt sich eine einseitige Verkürzung des maximalen Drehwinkels des Lenkrades, die zu unfallgefährdung Anlaß geben oder zu einem Abriß des Stromverbinders führen kann, durch den die Gassack-Aufprall-Schutzeinrichtung außer Funktion gesetzt wird. Es bedarf somit jeweils vor der Montage des Lenkrades auf der Lenksäule einer sorgfältigten Einzelüberprüfung der Spiralband-Stellung und seiner genauen Justierung in die Mittelstellung. Abgesehen von dem erheblichen durch die Überprüfung begründeten Arbeitsaufwand, sind das Unterbleiben der Überprüfung sowie eine Falscheinstellung durch den Monteur nicht mit Sicherheit auszuschließen.

Zur Vermeidung dieses Nachteils ist aus der DE-A-3 041 258 ein Stromleitungsverbinder mit einem aus zwei Teilen bestehenden Gehäuse bekannt geworden, dessen Teile zum Zwecke der Justierung in der Einbaulage mittels einer als Sollbruchstelle wirkenden, unter der Einwirkung einer vorbestimmten Kraft zerstörbaren Verbindung miteinander verbunden sind. Diese Anordnung vermag die gestellte Aufgabe nicht zu erfüllen insofern, als die Teile vor ihrem Einbau einer Vielzahl von Funktionsprüfungen unterliegen, so etwa der Prüfung des Drehmomentes und des Drehwiderstandes, die eine Drehung des Lenkrades von Anschlag zu Anschlag und damit die Zerstörung der Sollbruchstelle bereits vor der Endmontage erforderlich machen. Eine Sicherung im Falle einer späteren Demontage gegen Fehlmontage ist mit dieser Anordnung überhaupt nicht möglich.

Der vorliegenden Erfindung liegt als Aufgabe die Schaffung eines Leitungsverbinders der beschriebenen Art zugrunde, bei dem die Gefahr eines Montagefehlers sowohl bei der Erstmontage als auch bei einer späteren Montage nach gegebenenfalls wartungsbedingtem Ausbau weitestgehend vermindert ist und die Erfindung besteht darin, daß der Kern mit einer Bohrung und das Gehäuse mit einer Rastausnehmung versehen sowie das Gehäuse und der Kern mittels eines Riegels gegeneinander fixierbar sind, der einen in die Bohrung des Kerns einclipsbaren Clipsstift sowie eine in die Rastausnehmung einpaßbare Rastnase aufweist.

Durch die Erfindung ist ein Leitungsverbinder geschaffen, bei dem eine Fehlmontage praktisch vollständig ausgeschlossen ist dadurch, daß das Gehäuse gegen den Kern in die richtige Stellung gebracht und in dieser Stellung fixiert wird, wobei die Fixierung erst nach der Montage gelöst wird, so daß eine unbeabsichtigte Verdrehung nicht eintreten kann.

In einer Ausführungsform kann der Riegel von einem die Durchtrittsbohrung für die Lenkspindel umfassenden Ring gebildet sein, vorteilhaft ist der Riegel jedoch von einem die Durchtrittsbohrung für die Lenkspindel umfassenden, sich mit seinem Rand auf dem Kern abstützenden Topf gebildet, wodurch das Erfassen des Riegels zum Zwecke des Abziehens nach der Montage des Stromleitungsverbinders bezw. für das Einsetzen vor dessen gegebenenfalls erforderlich werdender Demontage wesentlich erleichtert wird. Die Rastausnehmung weist — bezogen auf die Rastnase — eine ein geringes Drehspiel zwischen Kern und Gehäuse gewährleistende größere Breite auf zum Zwecke des Ausgleichs der sich aus der Zahnteilung der Spindel ergebenden Drehweg-Toleranzen.

Die Erfindung ist in der einen Stromleitungsverbinder gemäß Erfindung in Sprengdarstellung wiedergebenden Zeichnung beispielsweise veranschaulicht.

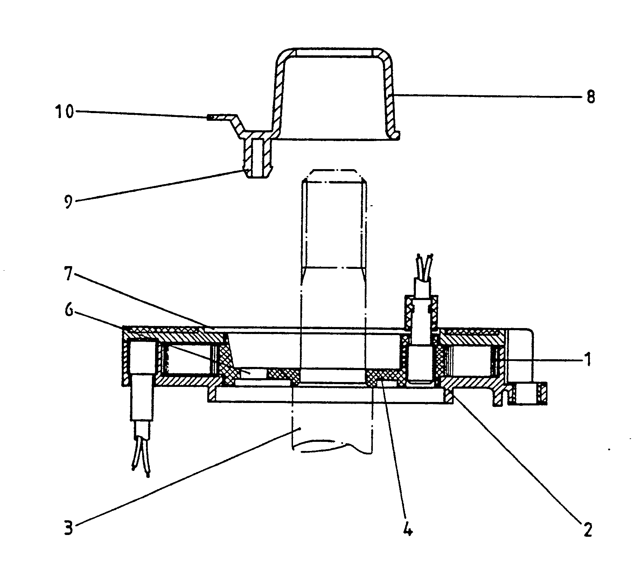

Die in der Zeichnung wiedergegebene Justiereinrichtung für einen Stromleitungsverbinder von Gassack-Aufprall-Schutzeinrichtungen besteht aus einem im wesentlichen von einem Spiralband 1 gebildeten Stromleiter, der in mehreren konzentrischen Wicklungen in einem gestellfest montierbaren Gehäuse 2 angeordnet ist, sowie einem an der Lenkspindel 3 befestigten und mit dem Lenkrad drehenden Kern 4, wobei die Enden des Spiralbandes 1 an Klemmen des Gehäuses 2 einerseits und des Kernes 4 andererseits enden. Der Kern 4 ist mit einer Bohrung 6 und das Gehäuse 2 mit einer Rastausnehmung 7 versehen, wobei das Gehäuse 2 und der Kern 4 mittels eines Riegels 8 gegeneinander fixierbar sind, der einen in die Bohrung 6 des Kerns 4 einclipsbaren Clipsstift 9 sowie eine in die Rastausnehmung 7 einpaßbare Rastnase 10 aufweist. Der Riegel 8 ist im Falle der dargestellten Ausführungsform von einem die Durchtrittsbohrung für die Lenkspindel 3 umfassenden, sich mit seinem Rand auf dem Kern 4 abstützenden Topf gebildet, er kann jedoch auch von einem die Durchtrittsbohrung für die Lenkspindel 3 umfassenden, sich auf dem Kern 4 abstützenden Ring gebildet sein. Die Rastausnehmung 7 weist in einer aus der Zeichnung nicht erkennbaren Weise eine — bezogen auf die Rastnase 10 — ein geringes Drehspiel zwischen Kern 4 und Gehäuse 2 gewährleistende Breite zum Ausgleich der sich aus der Zahnteilung der Lenkspindel ergebenden Drehwegtoleranz auf.

## Patentansprüche

1. Justiereinrichtung für einen Stromleitungsverbinder von Gassack-Aufprall-Schutzeinrichtungen, bestehend aus einem im wesentlichen von einem Spiralband (1) gebildeten Stromleiter, der in mehreren konzentrischen Wicklungen in einem gestellfest montierbaren Gehäuse (2) angeordnet ist, sowie einem an der Lenkspindel (3) befestigten und mit dem Lenkrad drehenden Kern (4), wobei die Enden des Spiralbandes (1) an Klemmen des Gehäuses (2) einerseits und des Kernes (4) andererseits enden und der Kern (4) gegenüber dem Gehäuse (2) zu Montagezwecken justiert ist, dadurch gekennzeichnet, daß der Kern (4) mit einer Rohrung (6) und das Gehäuse (2) mit einer Rastausnehmung (7) versehen sowie das Gehäuse (2) und der Kern mittels eines Riegels (8) gegeneinander fixierbar sind, der einen in die Bohrung (6) des Kerns (4) einclipsbaren Clipsstift (9) sowie eine in die Rastausnehmung (7) einpaßbare Rastnase (10) aufweist.

2. Justiereinrichtung für einen Stromleitungsverbinder nach Anspruch 1, dadurch gekennzeichnet, daß der Riegel (8) von einem die Durchtrittsbohrung für die Lenkspindel (3) umfassenden, sich auf dem Kern (4) abstützenden Ring gebildet ist.

3. Justiereinrichtung für einen Stromleitungsverbinder nach Anspruch 1, dadurch gekennzeichnet, daß der Riegel (8) von einem die Durchtrittsbohrung für die Lenkspindel (3) umfassenden, sich auf dem Kern (4) abstützenden Topf gebildet ist.

4. Justiereinrichtung für einen Stromleitungsverbinder nach einem der Ansprüche 2 oder 3, dadurch gekennzeichnet, daß die Rastausnehmung (7) bezogen auf die Rastnase (10) — eine ein geringes Drehspiel zwischen Kern (4) und Gehäuse (2) gewährleistende Breite aufweist.

## Claims

1. Adjusting device for a connector for current conduction of shock-preventing airbag safety systems, comprising a current conductor, which is substantially formed from a helical band (1) and is disposed in a plurality of concentric windings in a housing (2) which is fixedly mountable on the frame, and a core (4), which is secured to the steering column (3) and rotates with the steering wheel, the ends of the helical band (1) terminating, on the one hand, at terminals of the housing (2) and, on the other hand, at terminals of the core (4), and the core (4) is adjusted relative to the housing (2) for mounting purposes, characterised in that the core (4) is provided with a bore (6), and the housing (2) is provided with a notched recess (7), and the housing (2) and the core can be fixed relative to each other by means of a lock (8) which has a clip-in pin (9), which can be clipped into the bore (6) in the core (4), and a notched projection (10) which can be fitted into the notched recess (7).

2. Adjusting device for a connector for current conduction according to claim 1, characterised in that the lock (8) is formed from a ring, which surrounds the through-bore for the steering column (3) and is supported on the core (4).

3. Adjusting device for a connector for current conduction according to claim 1, characterised in that the lock (8) is formed from a cup-shaped container which surrounds the through-bore for the steering column (3) and is supported on the core (4).

4. Adjusting device for a connector for current conduction according to one of claims 2 or 3, characterised in that the notched recess (7) — relative to the notched projection (10) — has a width which ensures slight rotational play between core (4) and housing (2).

## Revendications

1. Dispositif d'ajustement pour un connecteur de conduction de courant de systèmes de sécurité anti-choc à sac gonflable, qui se compose d'un conducteur de courant constitué essentiellement par un ruban en spirale (1), qui est disposé en plusieurs spires concentriques dans un boîtier (2) destiné à être monté en position fixe sur le châssis, ainsi que d'un noyau (4) qui est fixé à l'arbre de direction (3) et tourne avec le volant, les extrémités du ruban en spirale (1) se terminant dans des pinces prévues d'une part sur le boîtier (2) et d'autre part sur le noyau (4) et le noyau (4) étant ajusté par rapport au boîtier (2) à des fins de montage, caractérisé en ce que le noyau (4) est muni d'une forure (6) et le boîtier (2) est muni d'une encoche (7) et en ce que le boîtier (2) et le noyau peuvent être fixés l'un à l'autre au moyen d'un verrou (8) qui comporte une cheville d'encliquetage (9) encliquetable dans la forure (6) du noyau (4), ainsi qu'un ergot de crantage (10) qui peut s'emboîter dans l'encoche (7).

2. Dispositif d'ajustement pour un connecteur de conduction de courant selon la revendication 1, caractérisé en ce que le verrou (8) est constitué par un anneau entourant le trou de passage pour l'arbre de direction (3) et prenant appui sur le noyau (4).

3. Dispositif d'ajustement pour un connecteur de conduction de courant selon la revendication 1, caractérisé en ce que le verrou (8) est constitué par un pot qui entoure le trou de passage pour l'arbre de direction (3) et qui prend appui sur le noyau (4).

4. Dispositif d'ajustement pour un connecteur de conduction de courant selon la revendication 2 ou 3, caractérisé en ce que l'encoche (7) présente — par rapport à l'ergot de crantage (10) — une largeur garantissant un léger jeu de rotation entre le noyau (4) et le boîtier (2).